# FASCICULE DE BREVET EUROPEEN

(11) **EP 1 493 664 B1**
(45) Date de publication et mention de la délivrance du brevet: **29.03.2006**
(21) Numéro de dépôt: 04291532.2
(22) Date de dépôt: 17.06.2004
(51) Int. Cl.: B64D 29/06, E05B 15/00, E05C 19/14

(54) **Verrouillage des capots de nacelle d'un turboreacteur**
Verriegelungseinrichtung für die Verkleidung einer Triebwerkgondel
Latch for turbine nacelle cowls

(30) Priorité: 04.07.2003 FR 0308155
(43) Date de publication de la demande: 05.01.2005
(73) Titulaire: SNECMA, 75015 Paris (FR)
(72) Inventeur: Halin, Yves, Robert, 31400 Toulouse (FR)
(74) Mandataire: Ramey, Daniel

(56) Documents cités:
- EP-A- 1 091 059
- EP-A- 1 197 619
- EP-A- 1 314 839
- BE-A- 473 228

## Description

L'invention concerne un dispositif de verrouillage des capots de nacelle d'un turboréacteur.

Les capots de nacelle sont des panneaux de forme semi-cylindrique dont les bords longitudinaux supérieurs sont articulés autour d'axes longitudinaux et dont les bords longitudinaux inférieurs sont équipés de moyens de verrouillage permettant de les fixer l'un à l'autre en position rapprochée ou position d'accostage.

Ces moyens de verrouillage sont formés par des verrous répartis le long des bords longitudinaux inférieurs des capots, ces verrous comprenant des leviers d'accrochage portés par l'un des capots et engagés à la main, indépendamment les uns des autres, sur des doigts d'accrochage montés sur l'autre des capots.

On a constaté qu'il arrivait que des capots de nacelle, qui avaient été ouverts pour une opération de maintenance, aient été ensuite mal refermés, certains verrous étant oubliés ou incomplètement verrouillés, ce qui s'est traduit ensuite par l'ouverture en vol des capots et par leur arrachement.

On a déjà proposé des dispositifs de verrouillage visant à réduire ces risques, grâce à des moyens de signalisation qui sont associés aux verrous et qui sont montés pour être bien visibles et attirer l'attention quand les verrous sont déverrouillés ou mal verrouillés.

Un tel dispositif de verrouillage est connu de EP-A-1091059, qui montre toutes les caractéristiques du préambule de la revendication 1.

Les moyens connus de ce type se sont cependant révélés peu efficaces ou bien sont relativement complexes et encombrants, lourds et coûteux.

L'invention a notamment pour but d'apporter une solution simple, efficace et peu coûteuse au problème de la sécurisation du verrouillage de ces capots.

Elle propose à cet effet des capots de nacelle de turboréacteur, chaque capot comprenant un bord longitudinal supérieur articulé autour d'un axe longitudinal et un bord longitudinal inférieur destiné à être fixé à un bord longitudinal inférieur de l'autre capot par un dispositif de verrouillage, ce dispositif comprenant des organes de verrouillage montés sur le bord longitudinal inférieur d'un premier des capots et coopérant avec des organes d'accrochage montés sur le bord longitudinal inférieur d'un second des capots, caractérisé en ce que les organes de verrouillage sont des loquets dont chacun est fixé sur un arbre d'entraînement en rotation parallèle à l'axe d'articulation du premier capot et est déplaçable entre une position angulaire de verrouillage et une position angulaire de déverrouillage, et en ce que chaque organe d'accrochage est monté pivotant sur le bord longitudinal inférieur du second capot autour d'un axe parallèle à l'axe d'articulation du second capot et comprend des moyens d'accrochage sur un loquet correspondant pour être déplacé par celui-ci entre une position angulaire de verrouillage et une position angulaire de déverrouillage.

Le montage en rotation des loquets et des organes d'accrochage sur des axes parallèles permet un verrouillage très simple et très efficace tout en réduisant l'encombrement à l'intérieur des capots, les loquets et les organes d'accrochage pivotant vers l'extérieur des capots au déverrouillage. Leur pivotement vers l'extérieur les rend bien visibles, ce qui permet de constater aisément si les capots sont ou non verrouillés.

Selon une autre caractéristique de l'invention, les loquets sont fixés sur un même arbre d'entraînement en rotation et sont simultanément déplaçables entre leurs positions angulaires de verrouillage et de déverrouillage.

Cela facilite beaucoup le verrouillage des capots et évite les risques d'oubli d'actionnement de l'un des moyens de verrouillage, ces derniers étant simultanément verrouillés ou déverrouillés.

Selon une autre caractéristique de l'invention, les organes d'accrochage sont indépendants les uns des autres et sont chacun associés à un ressort de rappel en position de déverrouillage.

Grâce à cette disposition, un organe d'accrochage est automatiquement ramené ou maintenu en position visible de déverrouillage si le loquet correspondant, pour une raison quelconque, ne l'entraîne pas ou ne le maintient pas en position de verrouillage.

Dans un mode de réalisation particulier de l'invention, chaque organe d'accrochage est formé par une patte qui est montée pivotante par une extrémité sur l'axe d'articulation précité et qui comporte à son extrémité opposée une rainure en U dont l'ouverture est orientée vers l'axe d'articulation et est destinée à recevoir une partie du loquet correspondant.

Cette partie du loquet est formée par un doigt cylindrique qui est parallèle à l'arbre d'entraînement du loquet et qui est relié à cet arbre par une ou deux pattes perpendiculaires à l'arbre et au doigt précité.

Ce mode de réalisation de l'invention est particulièrement simple et d'une grande fiabilité.

En outre, les loquets accrochés sur les organes d'accrochage dans leur position de déverrouillage forment des moyens de rapprochement des bords longitudinaux des capots quand ces loquets sont entraînés vers leur position de verrouillage.

La fermeture et le verrouillage des capots deviennent ainsi particulièrement simples et sûrs, le verrouillage étant assuré selon l'invention que les capots soient déjà positionnés bord à bord ou qu'ils restent un peu écartés l'un de l'autre.

Selon encore une autre caractéristique de l'invention, la position de verrouillage des loquets se trouve au-delà d'une position d'équilibre instable dans laquelle les loquets sont alignés sur l'axe d'articulation des organes d'accrochage. Dans cette position d'équilibre instable, les loquets sont en appui axial sur les moyens d'accrochage des organes d'accrochage.

Cet appui forme avantageusement un point dur qu'il faut passer pour amener les loquets dans leur position de verrouillage et qui assure donc naturellement un maintien des loquets dans cette position.

On améliore ainsi la sécurité du verrouillage.

Dans le mode de réalisation préféré de l'invention, les loquets sont déplaçables entre leur position de verrouillage et de déverrouillage au moyen d'une poignée reliée à leur arbre d'entraînement en rotation, et cette poignée forme un levier de démultiplication d'efforts.

Pour cela, cette poignée peut être articulée sur le premier capot autour d'un axe parallèle à l'axe de l'arbre d'entraînement des loquets et comporte une lumière rectiligne dans laquelle est engagé un doigt excentré porté par l'arbre d'entraînement.

Cette réalisation permet une démultiplication de l'effort de verrouillage et permet également d'avoir une course de déplacement des loquets sur une valeur importante entre leurs positions de verrouillage et de déverrouillage, cette course étant par exemple de 160 à 180 degrés environ quand la course correspondante de déplacement angulaire de la poignée est seulement de 90 degrés environ.

L'invention sera mieux comprise et d'autres caractéristiques, détails et avantages de celle-ci apparaîtront plus clairement à la lecture de la description qui suit, faite à titre d'exemple en référence aux dessins annexés dans fesquels :
- la figure 1 est une vue schématique en perspective de deux capots de nacelle de turboréacteur ;
- la figure 2 est une vue de face représentant ces deux capots en position fermée ;
- la figure 3 représente schématiquement un verrou selon l'invention;
- les figures 4a à 4d représentent schématiquement quatre phases d'une opération de déverrouillage des capots ;
- les figures 5a, 5b et 5c représentent trois phases d'une opération de verrouillage des capots ;
- les figures 6a à 6e représentent schématiquement cinq phases d'une opération d'accostage et de verrouillage simultané des capots ;
- les figures 7a à 7e représentent schématiquement cinq phases d'une opération d'accostage et de verrouillage simultané des capots quand les loquets sont en position sortie ,
- la figure 8 représente schématiquement une poignée du dispositif de verrouillage selon l'invention ;
- la figure 9 représente schématiquement un mode particulier de montage de cette poignée.

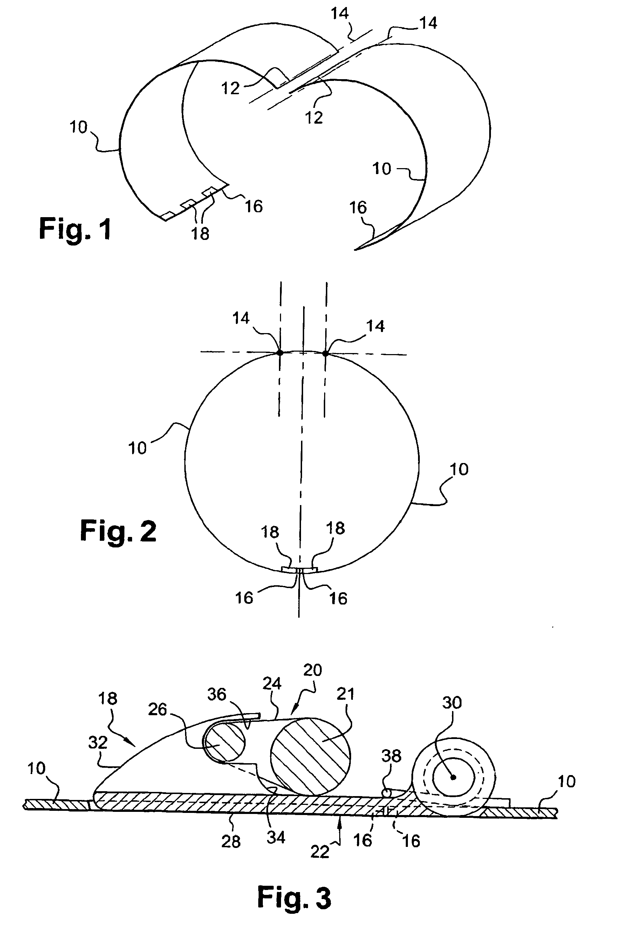

On se réfère d'abord aux figures 1 et 2 qui représentent schématiquement deux capots de nacelle de turboréacteur d'un type classique, ces capots étant formés par deux panneaux 10 de forme sensiblement semi-cylindrique, dont les bords longitudinaux supérieurs 12 sont articulés autour d'axes longitudinaux parallèles 14 par des charnières ou analogues, et dont les bords longitudinaux inférieurs 16 sont équipés de moyens de verrouillage 18 permettant de les fixer solidement l'un à l'autre quand les deux capots 10 sont en position fermée où leurs bords longitudinaux inférieurs 16 sont ramenés l'un contre l'autre comme représenté en figure 2.

Un moyen de verrouillage 18 selon l'invention est représenté à titre d'exemple en figure 3.

Ce moyen de verrouillage comprend d'une part un loquet 20 monté sur le bord longitudinal inférieur 16 d'un premier capot 10, celui de gauche dans la représentation de la figure 3, et d'autre part un organe d'accrochage 22 monté sur le bord longitudinal 16 du second capot 10, celui de droite en figure 3.

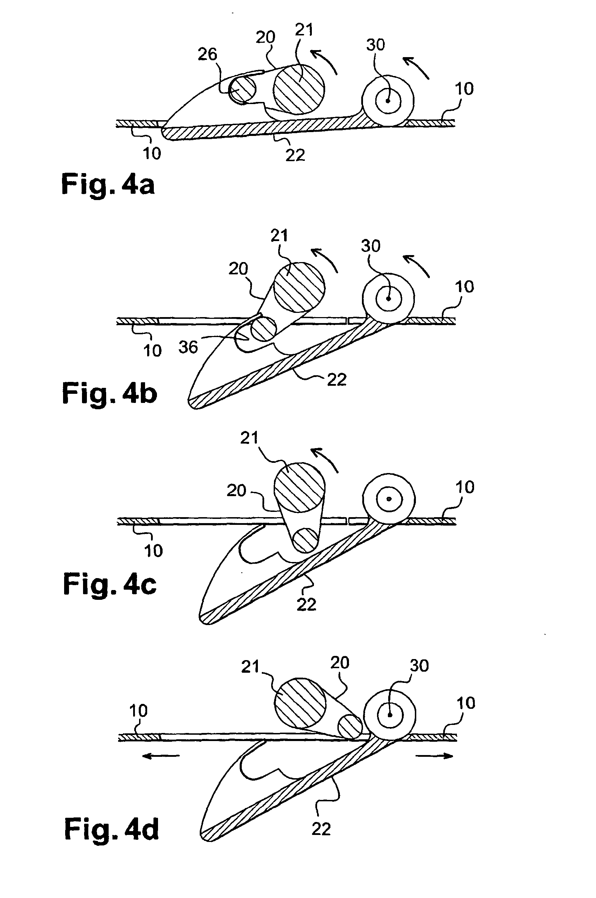

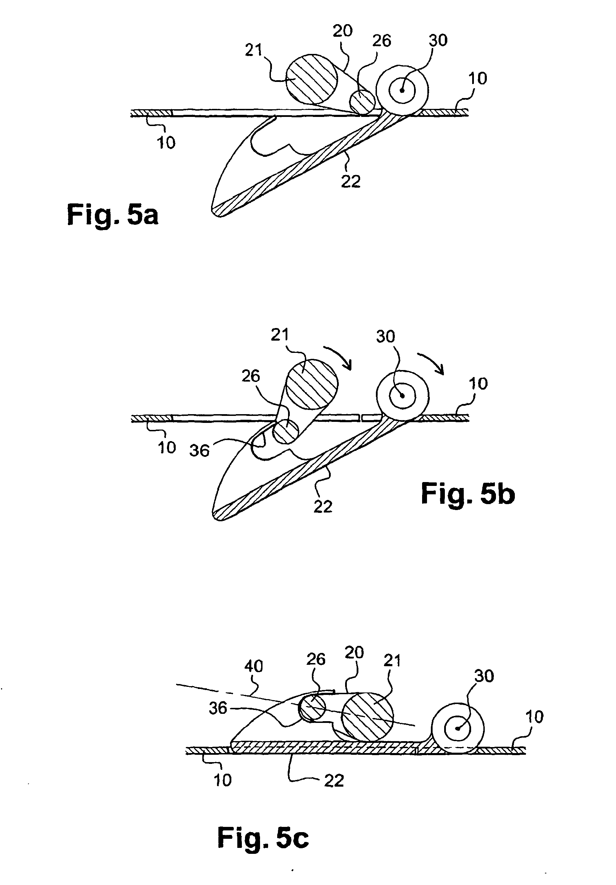

Le loquet 20 est solidaire en rotation d'une tige cylindrique 21 longitudinale qui est portée par le premier capot 10 et qui s'étend parallèlement aux axes 14 d'articulation du capot, cette tige 21 formant un arbre d'entraînement en rotation du loquet 20 entre une position de verrouillage représentée en figure 3 et une position de déverrouillage complet représentée aux figures 4d et 5a par exemple.

Le loquet 20 comprend, dans cet exemple de réalisation, deux bras parallèles 24 formant une chape, qui sont solidaires par une extrémité de l'arbre 21 et qui sont reliés entre eux à leur autre extrémité par un doigt cylindrique 26 parallèle à l'arbre 21.

L'organe d'accrochage 22 monté sur le bord longitudinal inférieur 16 du second capot 10 comprend une patte 28 qui est montée à rotation libre par une extrémité sur le second capot 10 autour d'un axe 30 parallèle à l'arbre 21 et dont l'extrémité opposée comporte des moyens d'accrochage sur le doigt cylindrique 26 du loquet 20.

Dans cet exemple de réalisation, ces moyens d'accrochage sont formés par un bec 32 qui s'étend en saillie sur la patte 28 vers l'intérieur des capots 10 dans la position de verrouillage représentée en figure 3 et qui délimite une rainure en U 36 destinée à recevoir le doigt cylindrique 26 du loquet 20, l'ouverture de cette rainure 36 étant orientée vers la tige d'articulation 30.

Du côté de l'extrémité libre de l'organe d'accrochage 22, le bec 32 est de forme arrondie convexe, tandis que l'extrémité ouverte de la rainure 36 est raccordée à la patte 28 par une surface arrondie concave 34.

Par ailleurs, un ressort de rappel 38 est associé à l'organe d'accrochage 22 et est formé par exemple d'un ressort spirale enroulé sur l'axe 30 et dont une extrémité est fixe en rotation, son autre extrémité étant montée sur l'organe d'accrochage 22 pour le faire pivoter vers sa position de déverrouillage représentée par exemple aux figures 4d et 5a.

Le dispositif de verrouillage selon l'invention comprend plusieurs loquets 20 et organes d'accrochage 22 du type qui vient d'être décrit, qui sont répartis sur la longueur des bords longitudinaux inférieurs 16 des capots 10 et qui sont par exemple au nombre de quatre. Les loquets 20 sont avantageusement montés sur un même arbre d'entraînement 21 tandis que les organes d'accrochage 22 sont indépendants les uns des autres et libres en rotation autour de l'axe 30.

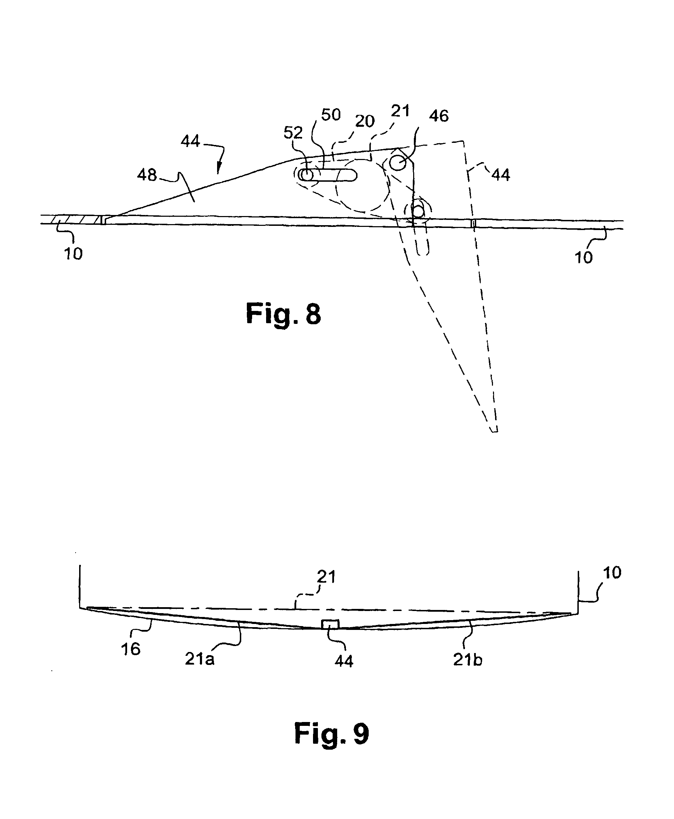

L'arbre 21 d'entraînement des loquets est lui-même manoeuvré par tout moyen approprié, tel par exemple qu'une poignée du type de celle représentée en figure 8 et qui sera décrite dans ce qui suit.

Le fonctionnement du dispositif selon l'invention va maintenant être décrit en référence aux figures 4a à 4d, 5a à 5 c, 6a à 6e et 7a à 7e.

Les figures 4a à 4d représentent quatre phases du déverrouillage des capots, la première phase représentée en figure 4a comprenant une rotation de l'arbre 21 dans le sens indiqué par la flèche à partir de la position de verrouillage complet représentée en figure 3. La rotation du loquet 20 se traduit par une rotation correspondante de l'organe d'accrochage 22, qui tourne autour de l'axe 30 dans le sens indiqué par la flèche jusqu'à ce que le doigt cylindrique 26 du loquet se dégage de la rainure 36 comme représenté en figure 4b.

Ensuite, la rotation de l'arbre 21 se poursuit dans le même sens comme représenté en figure 4c, mais l'organe d'accrochage 22 n'est plus entraîné par le loquet et reste dans la position représentée en figure 4c, qui est sa position de déverrouillage où il est en saillie sur les capots 10 et est bien visible. Le ressort de rappel 38 de cet organe de verrouillage 22 le maintient dans cette position.

En figure 4d, le loquet 20 est dans sa position de déverrouillage complet, l'organe d'accrochage 22 restant dans la position de déverrouillage précitée. On peut alors ouvrir les capots 10 en les écartant l'un de l'autre comme indiqué par les flèches en figure 4d.

Le déplacement angulaire du loquet 20 entre ses positions de verrouillage et de déverrouillage complet est d'environ 170 degrés dans cet exemple, et celui de l'organe d'accrochage 22 de 45 degrés environ.

Un premier mode de verrouillage des capots est représenté aux figures 5a, 5b et 5c.

Dans une première phase, les bords inférieurs des deux capots sont rapprochés l'un de l'autre jusqu'à être sensiblement jointifs comme représenté en figure 5a.

L'organe d'accrochage 22 est maintenu par son ressort de rappel dans la position de déverrouillage représentée, tandis que le loquet 20 est dans sa position de déverrouillage complet dans laquelle son doigt cylindrique 26 se trouve au voisinage de l'extrémité de l'organe d'accrochage 22 articulée sur l'axe 30.

La deuxième phase du verrouillage représenté en figure 5b comprend un entraînement de l'arbre 21 en rotation dans le sens indiqué par la flèche, ce qui amène le doigt cylindrique 26 du loquet 20 dans l'extrémité ouverte de la rainure en U 36 de l'organe d'accrochage. Lorsque la rotation du loquet 20 est poursuivie dans le sens indiqué, le doigt cylindrique 26 de ce loquet vient en appui sur le bord d'extrémité de la rainure 36 et fait pivoter l'organe d'accrochage 22 vers sa position de verrouillage.

Le verrouillage complet est représenté en figure 5c, où l'on voit que l'organe d'accrochage 22 est revenu en alignement avec les bords longitudinaux inférieurs 16 des capots 10 et ne fait plus saillie à l'extérieur de ces derniers. Le doigt cylindrique 26 du loquet 20 se trouve légèrement au-delà d'une position d'équilibre instable dans laquelle son axe est dans le plan passant par l'axe de l'arbre 21 et l'axe 30. Dans cette position d'équilibre instable, le doigt cylindrique 26 est en appui sur le fond de la rainure 36, cet appui pouvant correspondre à un point dur favorisant le maintien du loquet 20 et de l'organe d'accrochage 22 dans leurs positions de verrouillage complet.

Le verrouillage correct de tous les moyens de verrouillage 18 équipant les capots 10 est vérifiable d'un coup d'oeil, aucun loquet 20 et aucun organe d'accrochage 22 ne devant être en saillie sur les capots.

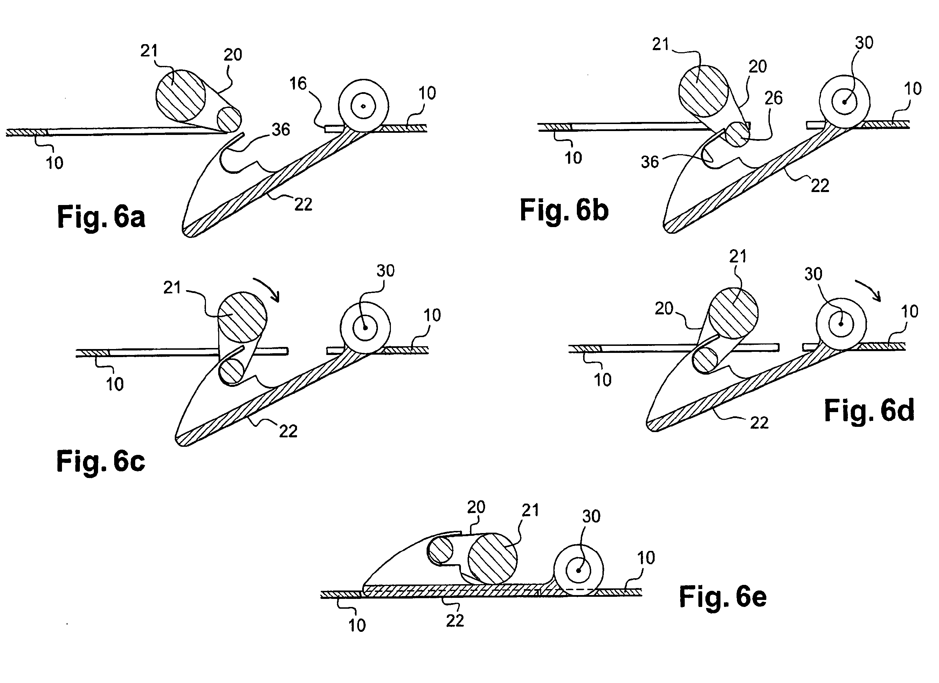

Les figures 6a à 6e représentent une opération de verrouillage qui a lieu dans le cas où les bords longitudinaux inférieurs 16 des capots 10 sont encore un peu écartés l'un de l'autre comme représenté en figure 6a.

On commence par rapprocher un peu les bords longitudinaux des deux capots 10 comme représenté en figure 6b, jusqu'à ce que les doigts cylindriques 26 des loquets 20 se trouvent au niveau des extrémités ouvertes des rainures 36 des organes d'accrochage 22 qui sont maintenus dans leur position de déverrouillage par leurs ressorts de rappel 38.

On fait alors tourner l'arbre 21 des loquets 20 pour engager les doigts cylindriques 26 dans les rainures 36 des organes d'accrochage 22, comme représenté en figure 6c, puis on poursuit cette rotation pour faire pivoter les organes d'accrochage 22 vers leurs positions de verrouillage comme représenté en figure 6d et 6e.

La rotation de l'arbre 21 depuis la position représentée en figure 6c jusqu'à la position représentée en figure 6e a simultanément pour effet de rapprocher l'un de l'autre les bords longitudinaux inférieurs 16 des capots 10 jusqu'à ce qu'ils soient sensiblement jointifs.

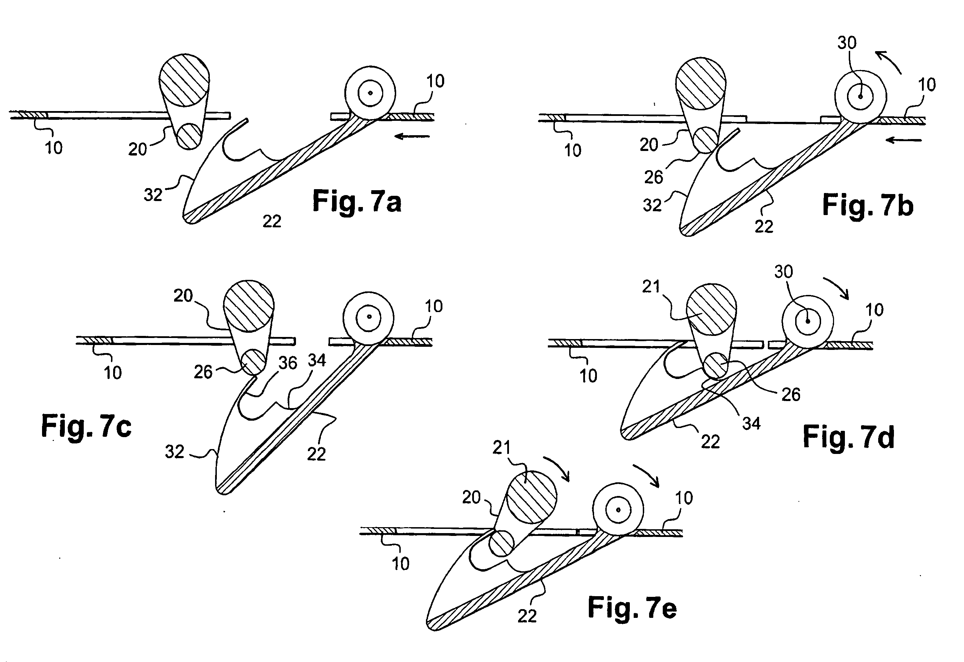

Un autre mode de verrouillage est représenté aux figures 7a à 7e, dans le cas où les loquets 20 sont dans une position intermédiaire entre leur position de déverrouillage complet et leur position de verrouillage et font saillie à l'extérieur du capot 10 sur lequel ils sont montés. Dans ce cas, quand on rapproche les bords longitudinaux inférieurs du capot 10 l'un de l'autre comme représenté en figure 7a, les organes d'accrochage 22 étant maintenus dans leur position de déverrouillage par leurs ressorts de rappel 38, les doigts cylindriques 26 des loquets 20 vont buter sur les surfaces extérieures convexes des becs 32 des organes d'accrochage 22 et vont faire pivoter ces derniers vers l'extérieur des capots comme représenté aux figures 7b et 7c, jusqu'à ce que les doigts passent les extrémités des becs 32 des organes d'accrochage 22 et viennent sensiblement au niveau des surfaces incurvées concaves 34 de ces organes d'accrochage comme représenté en figure 7d.

On fait ensuite tourner l'arbre 21 portant les loquets 20 dans le sens indiqué par la flèche en figure 7e, jusqu'au verrouillage complet.

Dans un mode préféré de réalisation de l'invention, l'arbre 21 portant les loquets 20 est entraîné en rotation au moyen d'une poignée 44 qui est représentée en trait plein en figure 8 dans sa position de verrouillage et en traits pointillés dans sa position de déverrouillage.

Cette poignée 44 forme un levier composé et est articulée sur le premier capot 10, sur lequel est monté l'arbre 21 d'entraînement en rotation des loquets, autour d'un axe 46 parallèle à l'arbre 21. La poignée 44 est formée d'une plaque en U ou en 1 dont une paroi 48 perpendiculaire à l'axe 46 comporte une lumière 50 dans laquelle est engagé un doigt 52 qui est parallèle à l'arbre 21 et excentré par rapport à celui-ci, le doigt 52 étant porté par l'arbre 21.

Par exemple, le doigt 52 est formé par un prolongement d'un doigt cylindrique 26 d'un loquet 20.

Quand la poignée 44 est dans la position de verrouillage représentée en trait plein en figure 8, elle s'étend dans le prolongement des bords longitudinaux inférieurs 16 des panneaux 10 et n'est pas visible. Pour déverrouiller les panneaux, on fait tourner la poignée 44 autour de son axe d'articulation 46 pour l'amener vers la position représentée en traits pointillés, le déplacement angulaire de la poignée entre ses deux positions de verrouillage et de déverrouillage étant légèrement supérieur à 90 degrés dans cet exemple. Cette rotation de la poignée se traduit par une rotation correspondante du doigt 52 autour de l'axe 46 et par un déplacement de ce doigt sur une majeure partie de la lumière 50, et par une rotation des loquets 20 et de leur arbre 21 autour de l'axe de l'arbre 21 sur 170 degrés environ.

La longueur de la poignée par rapport à son axe d'articulation 46 est plusieurs fois supérieure à celle des loquets 20, de sorte que la poignée joue le rôle d'un démultiplicateur d'effort tout en démultipliant le débattement angulaire des loquets 20 autour de l'axe de l'arbre 21. Cet arbre est guidé en rotation dans des paliers lisses de type classique portés par le premier capot 10.

La poignée 44 peut être montée à une extrémité de l'arbre 21 ou sur une partie intermédiaire de celui-ci.

Lorsque les bords longitudinaux inférieurs 16 des capots 10 ont une forme longitudinale incurvée comme représenté schématiquement en figure 9, il est préférable que l'arbre 21 soit formé de deux bouts d'arbre 21a, 21b placés bout à bout et qui forment des cordes entre les extrémités des bords 16 et leur milieu, la poignée 44 étant placée à la jonction 21a, 21b.

Cela évite d'utiliser un seul arbre rectiligne 21 qui s'étendrait sur toute la longueur du bord longitudinal inférieur 16 du capot, comme représenté en trait fantôme, et qui prendrait trop de place à l'intérieur des capots et serait gênant.

## Revendications

1. Capots de nacelle de turboréacteur, chaque capot (10) comprenant un bord longitudinal supérieur (12) articulé autour d'un axe longitudinal (14) et un bord longitudinal inférieur (16) destiné à être fixé sur un bord longitudinal inférieur (16) de l'autre capot (10) par un dispositif de verrouillage, ce dispositif comprenant des organes de verrouillage montés sur le bord longitudinal inférieur d'un premier capot (10) et coopérant avec des organes d'accrochage montés sur le bord longitudinal inférieur (16) d'un second capot (10), **caractérisés en ce que** les organes de verrouillage sont des loquets (20) dont chacun est fixé sur un arbre (21) d'entraînement en rotation parallèle à l'axe d'articulation (14) du premier capot (10) et est déplaçable entre une position angulaire de verrouillage et une position angulaire de déverrouillage, et **en ce que** chaque organe d'accrochage (22) est monté pivotant sur le bord longitudinal inférieur (16) du second capot (10) autour d'un axe (30) parallèle à l'axe d'articulation (14) du second capot et comprend des moyens (36) d'accrochage sur un loquet correspondant pour être déplacé par ce loquet entre une position angulaire de verrouillage et une position angulaire de déverrouillage.

2. Capots de nacelle selon la revendication 1, **caractérisés en ce que** les loquets (20) sont portés par un même arbre (21) d'entraînement en rotation et sont simultanément déplaçables entre leurs positions angulaires de verrouillage et de déverrouillage.

3. Capots de nacelle selon la revendication 1 ou 2, **caractérisés en ce que** les organes d'accrochage (22) sont indépendants les uns des autres et sont chacun associés à un ressort (38) de rappel en position de déverrouillage.

4. Capots de nacelle selon l'une des revendications précédentes, **caractérisés en ce que** les organes d'accrochage (22) sont en saillie à l'extérieur du second capot (10) dans leur position de déverrouillage.

5. Capots de nacelle selon l'une des revendications précédentes, **caractérisés en ce que** les organes d'accrochage (22) sont alignés avec les bords longitudinaux des capots dans leur position de verrouillage.

6. Capots de nacelle selon l'une des revendications précédentes, **caractérisés en ce que** chaque organe d'accrochage (22) est formé par une patte (28) qui est montée pivotante par une extrémité sur l'axe d'articulation (30) précité et qui comporte à son extrémité opposée une rainure en U (36) dont l'ouverture est orientée vers l'axe d'articulation et est destinée à recevoir une partie (26) du loquet (20) correspondant.

7. Capots de nacelle selon la revendication 6, **caractérisés en ce que** cette partie du loquet (20) est un doigt cylindrique (26) qui est parallèle à l'arbre (21) d'entraînement du loquet et qui est relié à cet arbre par une ou deux pattes (24) perpendiculaire à l'arbre (21) et au doigt (26).

8. Capots de nacelle selon l'une des revendications précédentes, **caractérisés en ce que** les loquets (20) accrochés sur les organes d'accrochage (22) dans leur position de déverrouillage forment des moyens de rapprochement des bords longitudinaux inférieurs (16) des capots quand ils sont entraînés vers leur position de verrouillage.

9. Capots de nacelle selon l'une des revendications précédentes, **caractérisés en ce que** la position de verrouillage des loquets (20) se trouve au-delà d'une position d'équilibre instable dans laquelle les loquets (20) sont alignés sur l'axe de l'arbre d'entraînement (21) et sur l'axe d'articulation (30) des organes d'accrochage.

10. Capots de nacelle selon la revendication 9, **caractérisés en ce que** dans ladite position d'équilibre instable, les loquets (20) sont en appui axial sur les moyens (36) d'accrochage des organes d'accrochage.

11. Capots de nacelle selon l'une des revendications précédentes, **caractérisés en ce que** les loquets (20) sont déplaçables entre leurs positions de verrouillage et de déverrouillage au moyen d'une poignée (44) reliée à leur arbre (21) d'entraînement en rotation.

12. Capots de nacelle selon la revendication 11, **caractérisés en ce que** la poignée (44) forme un levier de démultiplication d'effort.

13. Capots de nacelle selon la revendication 11 ou 12, **caractérisés en ce que** la poignée (44) est articulée sur le premier capot (10) autour d'un axe (46) parallèle à l'axe de l'arbre (21) d'entraînement des loquets et comporte une lumière rectiligne (50) dans laquelle est engagé un doigt (52) porté par l'arbre d'entraînement (21) et excentré par rapport à celui-ci.

## Patentansprüche

1. Verkleidungen einer TL-Triebwerksgondel, wobei jede Verkleidung (10) eine obere Längskante (12), die um eine Längsachse (14) drehbar angelenkt ist, und eine untere Längskante (16), die dazu bestimmt ist, an der unteren Längskante (16) der anderen Verkleidung (10) durch eine Verriegelungsvorrichtung befestigt zu werden, aufweist, wobei diese Vorrichtung Verriegelungsorgane umfasst, die an der unteren Längskante einer ersten Verkleidung (10) angebracht sind und mit Einhakorganen zusammenwirken, welche an der unteren Längskante (16) einer zweiten Verkleidung (10) angebracht sind,
**dadurch gekennzeichnet,**
**dass** es sich bei den Verriegelungsorganen um Fallriegel (20) handelt, die jeweils an einer parallel zur Gelenkachse (14) der ersten Verkleidung (10) liegenden Drehwelle (21) befestigt sind und zwischen einer Verriegelungs-Winkelstellung und einer Entriegelungs-Winkelstellung verschiebbar sind, und dass jedes Einhakorgan (22) an der unteren Längskante (16) der zweiten Verkleidung (10) schwenkbar um eine Achse (30) angebracht ist, welche parallel zur Gelenkachse (14) der zweiten Verkleidung (10) liegt, und Mittel (36) zum Verhaken mit einem entsprechenden Fallriegel umfasst, so dass es durch diesen Fallriegel zwischen einer Verriegelungs-Winkelstellung und einer Entriegelungs-Winkelstellung verschoben werden kann.

2. Verkleidungen einer Triebwerksgondel nach Anspruch 1,
**dadurch gekennzeichnet,**
**dass** die Fallriegel (20) auf einer und derselben Drehwelle (21) sitzen und gleichzeitig zwischen ihren Verriegelungs- und Entriegelungs-Winkelstellungen verschiebbar sind.

3. Verkleidungen einer Triebwerksgondel nach Anspruch 1 oder 2,
**dadurch gekennzeichnet,**
**dass** die Einhakorgane (22) voneinander unabhängig angeordnet sind und jeweils mit einer Rückstellfeder (38) zum Zurückstellen in die Entriegelungsstellung verbunden sind.

4. Verkleidungen einer Triebwerksgondel nach einem der vorherigen Ansprüche,
**dadurch gekennzeichnet,**
**dass** die Einhakorgane (22) in ihrer Entriegelungsstellung von der zweiten Verkleidung (10) nach außen hervorstehen.

5. Verkleidungen einer Triebwerksgondel nach einem der vorherigen Ansprüche,
**dadurch gekennzeichnet,**
**dass** die Einhakorgane (22) in ihrer Verriegelungsstellung mit den Längskanten der Verkleidungen fluchten.

6. Verkleidungen einer Triebwerksgondel nach einem der vorherigen Ansprüche,
**dadurch gekennzeichnet,**
**dass** jedes Einhakorgan (22) von einem Schließband (28) gebildet wird, das mit einem Ende schwenkbar an der oben genannten Gelenkachse (30) angebracht ist und an seinem anderen Ende eine U-förmige Nut (36) aufweist, deren Öffnung zu der Gelenkachse hin weist und dazu bestimmt ist, einen Teil (26) des entsprechenden Fallriegels (20) aufzunehmen.

7. Verkleidungen einer Triebwerksgondel nach Anspruch 6,
**dadurch gekennzeichnet,**
**dass** dieser Teil des Fallriegels (20) ein zylinderförmiger Finger (26) ist, der parallel zu der Drehwelle (21) des Fallriegels liegt und mit dieser Welle durch ein oder zwei Bänder (24) verbunden ist, die im rechten Winkel zu der Welle (21) und zu dem Finger (26) liegen.

8. Verkleidungen einer Triebwerksgondel nach einem der vorherigen Ansprüche,
**dadurch gekennzeichnet,**
**dass** die Fallriegel (20), wenn sie an den Einhakorganen (22) in ihrer Entriegelungsstellung eingehängt sind, als Mittel zum Annähern der unteren Längskanten (16) der Verkleidungen fungieren, wenn sie in ihre Verriegelungsstellung gebracht werden.

9. Verkleidungen einer Triebwerksgondel nach einem der vorherigen Ansprüche,
**dadurch gekennzeichnet,**
**dass** die Verriegelungsstellung der Fallriegel (20) jenseits einer Stellung eines instabilen Gleichgewichts liegt, in der sich die Fallriegel (20) in einer Linie mit der Achse der Drehwelle (21) und mit der Gelenkachse (30) der Einhakorgane befinden.

10. Verkleidungen einer Triebwerksgondel nach Anspruch 9,
**dadurch gekennzeichnet,**
**dass** in dieser Stellung eines instabilen Gleichgewichts die Fallriegel (20) in axialer Anlage an den Verhakmitteln (36) der Einhakorgane (22) sind.

11. Verkleidungen einer Triebwerksgondel nach einem der vorherigen Ansprüche,
**dadurch gekennzeichnet,**
**dass** die Fallriegel (20) zwischen ihren Verriegelungs- und Entriegelungs-Winkelstellungen mittels eines Griffs (44), der mit ihrer Drehwelle (21) verbunden ist, verschiebbar sind.

12. Verkleidungen einer Triebwerksgondel nach Anspruch 11,
**dadurch gekennzeichnet,**
**dass** der Griff (44) einen Kraftuntersetzungshebel bildet.

13. Verkleidungen einer Triebwerksgondel nach Anspruch 11 oder 12,
**dadurch gekennzeichnet,**
**dass** der Griff (44) an der ersten Verkleidung (10) um eine Achse (46) herum drehbar angelenkt ist, die parallel zur Achse der Drehwelle (21) der Fallriegel liegt, und ein rechtwinkliges Langloch (50) enthält, in dem sich ein Zapfen (52) in Eingriff befindet, der an der Drehwelle (21) außermittig zu dieser angebracht ist.

## Claims

1. Turbojet cowl doors, each door (10) having a top longitudinal edge (12) hinged about a longitudinal axis (14) and a bottom longitudinal edge (16) for fastening by means of locking apparatus to a bottom longitudinal edge (16) of the other door (10), the apparatus comprising locking members mounted on the bottom longitudinal edge of a first door (10) and co-operating with hooking members mounted on the bottom longitudinal edge (16) of a second door (10), the doors being **characterized in that** the locking members are catches (20) each of which is fixed to a rotary drive shaft (21) parallel to the hinge axis (14) of the first door (10) and is movable between a locking angular position and an unlocking angular position, and **in that** each hooking member (22) is mounted on the bottom longitudinal edge (16) of the second door (10) to pivot about an axis (30) parallel to the hinge axis (14) of the second door and comprises means (36) for hooking onto a corresponding catch in order to be moved by said catch between a locking angular position and an unlocking angular position.

2. Cowl doors according to claim 1, **characterized in that** the catches (20) are carried on a common rotary drive shaft (21) and are movable simultaneously between their locking angular positions and their unlocking angular positions.

3. Cowl doors according to claim 1 or claim 2, **characterized in that** the hooking members (22) are independent from one another, each being associated with a return spring (38) urging it towards the unlocking position.

4. Cowl doors according to any preceding claim, **characterized in that** the hooking members (22) project outside the second door (10) when in their unlocking position.

5. Cowl doors according to any preceding claim, **characterized in that** the hooking members (22) are in alignment with the longitudinal edges of the doors when in their locking position.

6. Cowl doors according to any preceding claim, **characterized in that** each hooking member (22) is formed by a tab (28) which is pivotally mounted at one end on the above-mentioned hinge axis (30) and which includes at its opposite end a U-shaped notch (36) whose opening faces towards the hinge axis and is designed to receive a portion (26) of the corresponding catch (20).

7. Cowl doors according to claim 6, **characterized in that** said portion of the lock (20) is a cylindrical finger (26) which is parallel to the catch drive shaft (21) and which is connected to said shaft by one or two tabs (24) perpendicular to the shaft (21) and to the finger (26).

8. Cowl doors according to any preceding claim, **characterized in that** the catches (20) hooked onto the hooking members (22) in their unlocking position form means for moving the bottom longitudinal edges (16) of the doors towards each other while they are being driven towards their locking position.

9. Cowl doors according to any preceding claim, **characterized in that** the locking position of the catches (20) lies beyond a position of unstable equilibrium in which the catches (20) are in alignment with the axis of the drive shaft (21) and with the hinge axis (30) of the hooking members.

10. Cowl doors according to claim 9, **characterized in that** in said position of unstable equilibrium, the catches (20) bear axially against the hooking means (36) of the hooking members.

11. Cowl doors according to any preceding claim, **characterized in that** the catches (20) are movable between their locking and unlocking positions by means of a handle (44) connected to their rotary drive shaft (21).

12. Cowl doors according to claim 11, **characterized in that** the handle (44) forms a force multiplying lever.

13. Cowl doors according to claim 11 or claim 12, **characterized in that** the handle (44) is hinged to the first door (10) about an axis (46) parallel to the axis of the catch drive shaft (21) and includes a rectilinear slot (50) in which there is engaged a finger (52) carried by the drive shaft (21) and off-center relative thereto.
